(19) Europäisches Patentamt
European Patent Office
Office européen des brevets

(11) **EP 3 709 052 A1**

(12) **EUROPEAN PATENT APPLICATION**

(43) Date of publication:
**16.09.2020 Bulletin 2020/38**

(51) Int Cl.:
*G01S 7/484* (2006.01)          *G01S 17/89* (2020.01)
*G01S 17/931* (2020.01)          *G01S 17/10* (2020.01)

(21) Application number: **20157489.4**

(22) Date of filing: **14.02.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2019 JP 2019049126**

(71) Applicant: **Ricoh Company, Ltd.**
**Tokyo 143-8555 (JP)**

(72) Inventors:
• **YOSHINO, Yuuta**
  **Ohta-ku, Tokyo 143-8555 (JP)**
• **SAKABE, Ryota**
  **Ohta-ku, Tokyo 143-8555 (JP)**

(74) Representative: **White, Duncan Rohan**
**Marks & Clerk LLP**
**Fletcher House**
**Heatley Road**
**The Oxford Science Park**
**Oxford OX4 4GE (GB)**

(54) **OBJECT DETECTOR**

(57)    An object detector (100) includes an optical scanning system (200) and an optical scanning system controller (63). The optical scanning system (200) includes a light source (11) configured to emit light at a predetermined light-emission cycle and a phototransmitter system (20) configured to scan a certain range (SR) with the light emitted from the light source (11). The optical scanning system controller (63) is configured to control at least one of a scanning range of the phototransmitter system (20) and a light-emission cycle of the light source (11) of the optical scanning system (200) to maintain the number of times of light emission for one scan at a constant value, so as to calculate a distance to an object.

FIG. 1

## Description

## BACKGROUND

## Technical Field

Embodiments of the present invention relate to an object detector.

Related Art

In recent years, a light detection and ranging (LiDAR) is becoming indispensable as an application for advanced driver assistance system (Advanced Driver Assistance System). The LiDAR is an active-type range-finding sensor, and is an object detection device that emits laser light with a high directivity, receives light scattered from an object, and thus calculates a distance to the object.

The LiDAR has a higher spatial resolution than other types of active range finders such as ultrasonic sensors and millimeter-wave radars, and is capable of detecting a longer distance with a higher accuracy than a passive-type camera. Taking advantage of these characteristics, the LiDAR is expected as an important component to provide an accurate driving support, for example, in an environment with many complicated structures. Accordingly, a higher performance of detecting a distant object and a higher pixel density (spatial resolution) are expected.

In LiDAR that emits laser light with a high directivity, the pixel density decreases with an increase in the distance to an object. In order to increase the pixel density, there is a need to increase the number of laser-emission points per unit space. At this time, in order to maintain a constant refresh rate, the number of light emission per unit time needs to be increased, but the amount of heat generated by the light source increases. With an increase in the amount of heat generated by the light source, the amount of output light decreases due to the characteristics of the LiDAR. Accordingly, a signal-to-noise ratio (S/N) might decreases due to light scattered from the object at a distant location, and thus the detection of the object is difficult.

That is, the detectable distance and the pixel density are in a trade-off relation. In general, the detectable distance and the pixel density are design parameters, and are fixed values that are initially determined by a designer while balancing them. In order to reduce or eliminate the heat generation of the light source, a separate cooling device may be provided, but such a provision increases the size of the device, which is not suitable for use in a vehicle in which the installation site is limited.

In view of such issues, the configuration of the object detector that deflects light from a laser diode (LD) has been proposed such that the difference between the scanning angles of two adjacent scanning positions at the scanning center (the center of the effective scanning area) is smaller than the difference between the scanning angles of two adjacent scanning positions at the scanning ends (the edges of the effective scanning area) (for example, see JP-2007-15416-A1).

However, such an object detector is provided to reduce or eliminate changes in pixel density with the distance to the object, and the detectable distance is longest at the center of the scanning area in the object detector. For this reason, the object detector is configured to emit light such that the pixel density at the center of the scanning area is higher than the pixel density at the periphery of the center.

This configuration prevents a decrease in the pixel density for the distant object, but such an effect can be exhibited only for the central scanning area. If the distance to the distant location is detected with the peripheral scanning area, the pixel density is expected to decrease significantly.

As described above, there is an issue that the known object detector is unable to appropriately select the detectable distance and the pixel density according to the surrounding environment.

## SUMMARY

In view of the above, it is an object of the present invention to provide an object detector capable of selecting a priority of a detectable distance and a pixel density according to the surrounding environment.

In one aspect of this disclosure, there is provided an improved object detector including an optical scanning system and an optical scanning system controller. The optical scanning system includes a light source configured to emit light at a predetermined light-emission cycle and a phototransmitter system configured to scan a certain range with the light emitted from the light source. The optical scanning system controller is configured to control at least one of a scanning range of the phototransmitter system and a light-emission cycle of the light source of the optical scanning system to maintain the number of times of light emission for one scan at a constant value, so as to calculate a distance to an object.

The embodiments of the present disclosure provide an object detector capable of selecting a priority of a detectable distance and a pixel density according to the surrounding environment.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a block diagram of a configuration of an object detector according to a first embodiment;

FIGs. 2A, 2B, and 2C are illustrations of examples of a photoreceptor system, a phototransmitter system, and a synchronous system of the object detector in FIG. 1;

FIGs. 3A and 3B each is a timing chart of an emitted light pulse and a reflected light pulse;

FIG. 4 is a block diagram of a hardware configuration of a measurement control system of the object detector in FIG. 1;

FIGs. 5A and 5B each is a graph for describing output values of a light source;

FIG. 6 is an illustration of an example configuration for deriving a pixel density;

FIG. 7 is a graph of the relation of a detectable distance, a pixel density, and the number of times of light emission for one scan;

FIG. 8 is a flowchart for explaining the operation flow of the object detector in FIG. 1;

FIG. 9 is an illustration for describing how an object detector according to the second embodiment detects an object;

FIG. 10 is a flowchart for explaining the operation flow of the object detector according to the second embodiment;

FIG. 11 is an illustration of a basic configuration of a stereo camera;

FIG. 12 is an illustration for describing how an object detector according to the third embodiment detects an object; and

FIG. 13 is a timing chart for describing a reduction in noise in the object detector.

The embodiments of the present disclosure provide an optical system capable of substantially eliminating the influence of unwanted light while providing a compact optical path, an image projection apparatus incorporating the optical system, and a mobile object incorporating the optical system and the image projection apparatus.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Embodiments of the present invention are described in detail referring to the drawings. Like reference signs are applied to identical or corresponding components throughout the drawings and redundant description thereof may be omitted.

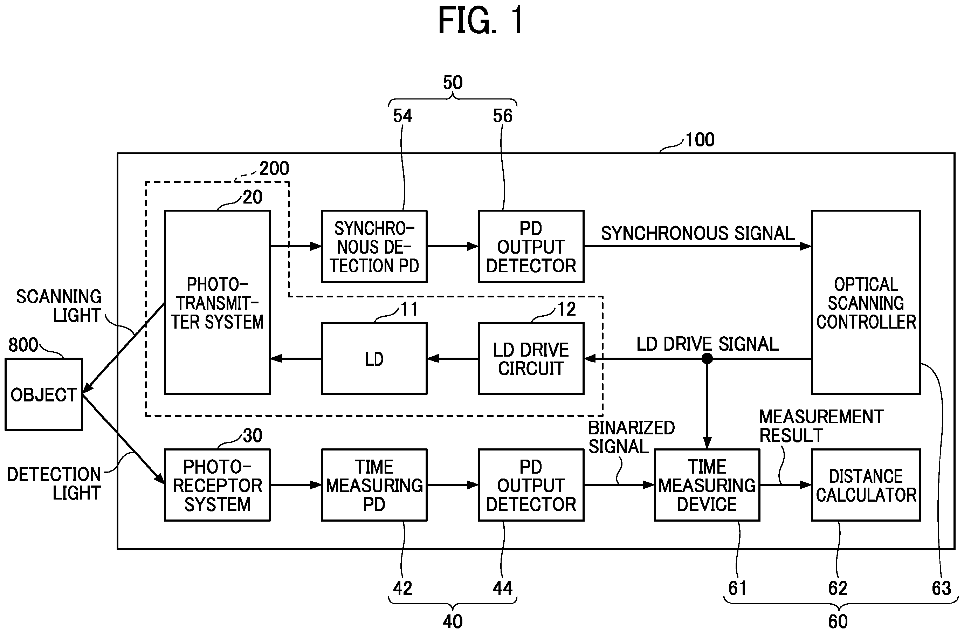

FIG. 1 is a block diagram of a configuration of an object detector according to a first embodiment of the present disclosure. The object detector 100 is a scanning LiDAR as an example, which is mounted on vehicle as a movable body. The scanning LiDAR emits light to an object, such as a proceeding vehicle, a parked vehicle, an obstacle, or a pedestrian, and receives light reflected by the object to measure distance to the object. The object detector 100 is powered from a vehicle battery.

As illustrated in FIG. 1, the object detector 100 includes a laser diode (LD) 11 as a light source, an LD drive device 12, a phototransmitter system 20, a photoreceptor system 30, a detection system 40, a synchronous system 50, and a measurement control system 60. The measurement control system 60 includes a time measurement device 61, a distance calculator 62, and an optical scanning system controller 63.

The LD 11, which is, for example, an edge-surface emitting laser, is driven by the LD drive device 12 to emit a laser beam. The LD 11 is capable of emitting light at a predetermined light-emission cycle. The LD drive device 12 controls the LD 11 to be turned on and emit a laser beam, using an LD drive signal that is a rectangular pulse signal generated by the optical scanning system controller 63. Examples of the LD drive device 12 include a capacitor connected to the LD 11 to supply electric current to the LD 11, a transistor to switch conduction and non-conduction between the capacitor and the LD 11, and a charger to charge the capacitor.

Alternatively, light receivers such as vertical cavity-surface emitting lasers (VCSEL) or light emitting diodes (LED) may be used as the light source, instead of the end-surface emitting lasers.

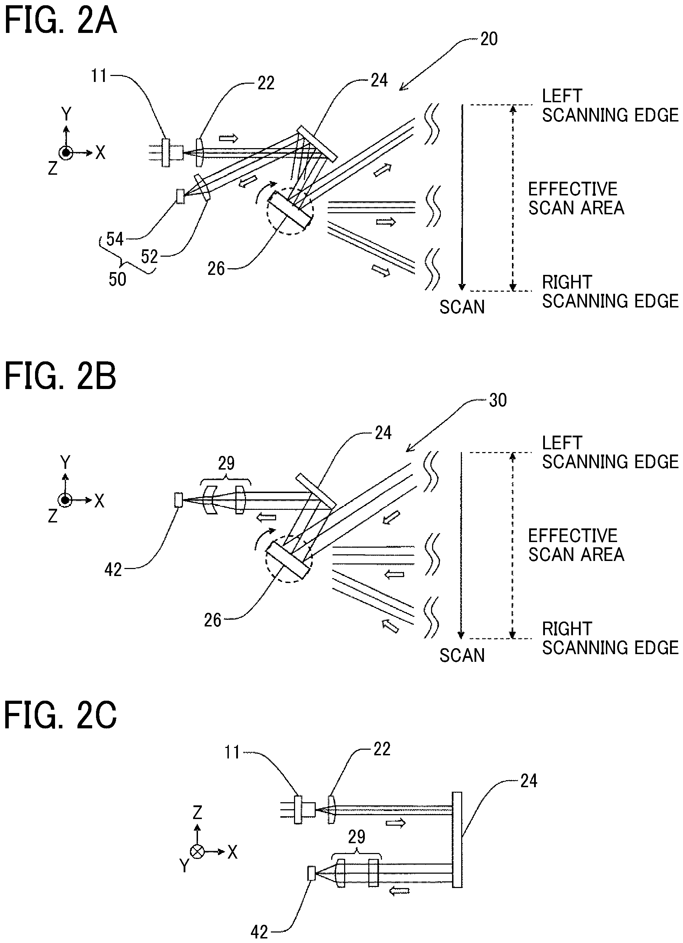

FIG. 2A schematically illustrates the phototransmitter system 20 and the synchronous system 50. FIG. 2B schematically illustrates the photoreceptor system 30. In the following description of FIG. 2A, FIG. 2B, and FIG. 2C, an XYZ three-dimensional rectangular coordinate system is referred to where appropriate. In the XYZ three-dimensional rectangular coordinate system, the Z-axis direction corresponds to the vertical direction.

The phototransmitter system 20 causes light emitted from the LD 11 to scan over a predetermined range. As illustrated in FIG. 2A, the phototransmitter system 20 includes a coupling lens 22, a reflecting mirror 24, and a rotating mirror 26 as a light deflector. The coupling lens 22 is disposed on the optical path of light emitted from the LD 11. The reflecting mirror 24 is disposed on the optical path of the light having passed through the coupling lens 22. The rotating mirror 26 is disposed on the optical path of the light reflected from the reflecting mirror 24. In this case, the reflecting mirror 24 is disposed on the optical path between the coupling lens 22 and the rotating mirror 26, such that the optical path is folded to reduce the size of the object detector 100.

In the optical path, the light emitted from the LD 11 passes through the coupling lens 22 to be shaped into a predetermined beam profile, and the shaped light is then reflected by the reflecting mirror 24. The rotating mirror 26 deflects the reflected light around the axis Z within a predetermined range of deflection.

The light deflected by the rotating mirror 26 within the predetermined range of deflection around the Z-axis corresponds to the light projected by the phototransmitter system 20, that is, the light projected from the object detector 100.

The rotating mirror 26 includes a plurality of reflection planes around the axis of rotation (axis Z) to reflect (deflect) the light reflected from the reflecting mirror 24 rotating around the axis of rotation, so that the light unidimensionally scan the effective scanning area deflection in a horizontal one-axis direction (Y-axis direction). In this case, the range of deflection, i.e., the effective scan area lies on +X side relative to the object detector 100. Hereinafter, the direction of rotation of the rotating mirror 26 is referred to also as a direction of rotation of mirror".

As illustrated in FIG. 2A, the rotating mirror 26 includes two reflecting planes opposed to each other. However, the present disclosure is not limited to this configuration. In some embodiments, the rotating mirror 26 may include one reflecting plane or three or more reflecting planes. Alternatively, in some embodiments, the rotating mirror 26 includes at least two reflection planes, which are tilted at different angles with respect to the axis of rotation (axis Z), to switch an area to be scanned and detected in Z-axis direction.

Thus, the LD 11, the LD drive device 12, and the phototransmitter system 20 constitute an optical scanning system 200 to cause light to optically scan the effective scan area.

In alternative to the concave mirror 26, a micro-electromechanical systems (MEMS) mirror may be provided.

The photoreceptor system 30 receives light including detection light (light reflected or scattered by the object) from the object with respect to the scanning light from the optical scanning system 200, and converts the light into an electric signal.

The photoreceptor system 30 includes, as illustrated in FIG. 2B, the rotating mirror 26, the reflecting mirror 24, and an image-forming optical system 29. The rotating mirror 26 reflects light projected from the phototransmitter system 20 and reflected (scattered) by an object within an effective scan area. The reflecting mirror 24 reflects the light reflected from the rotating mirror 26. The image-forming optical system forms an image of the light reflected from the reflecting mirror 24 onto a time measuring PD 42.

FIG. 2C is an illustration of an optical path between the LD 11 and the reflecting mirror 24 and another optical path between the reflecting mirror 24 and the time measuring PD 42.

As illustrated in FIG. 2C, the phototransmitter system 20 and the photoreceptor system 30 are aligned in Z-axis direction. The rotating mirror 26 and the reflecting mirror 24 are shared by the phototransmitter system 20 and the photoreceptor system 30. Such a configuration can reduce relative misalignment between the illumination range of the LD 11 and the light-receivable range of the time measuring PD 42 on an object, thus achieving stable detection of the object.

As illustrated in FIGs. 1 and 2B, the detection system 40 includes the time measuring PD 42, and a PD output detector 44. The time measuring PD 42 receives, through photoreceptor system 30, light projected from the phototransmitter system 20 and reflected (scattered) by an object disposed within the effective scan area. The PD output detector 44 detects a light signal received by (an output signal from) the time measuring PD 42.

The light projected from the phototransmitter system 20 and reflected (scattered) by an object is guided to the image-forming optical system 29 through the rotating mirror 26 and the reflecting mirror 24, and is condensed by the image-forming optical system 29 onto the time measuring PD 42, referring to FIG. 2B. In FIG. 2B, the reflecting mirror 24 is disposed between the rotating mirror 26 and the image-forming optical system 29, so that the optical path is folded. Accordingly, the size of the device is reduced. In this case, the image-forming optical system 29 includes two lenses (image-forming lenses). However, in some embodiments, the image-forming optical system may include a single lens or three or more lenses. Alternatively, a mirror optical system may be employed in the image-forming optical system 29.

The synchronous system 50 is provided to detect the rotation direction of the rotating mirror 26, and synchronizes the scanning direction of the system with the rotation direction of the rotating mirror 26.

As illustrated in FIGs. 1 and 2A, the synchronous system 50 includes a synchronous lens 52, a synchronous detection PD 54, and a PD output detector 56. The synchronous lens 52 is disposed on an optical path of light that has been emitted from the LD 11, passed through the coupling lens 22, and has been reflected by the reflecting mirror 24. The light is then deflected by the rotating mirror 26, and reflected by the reflecting mirror 24 again. The synchronous detection PD 54 is disposed on the optical path of the light that has passed through the synchronous lens 52. The PD output detector 56 detects a signal output from the synchronous detection PD 54.

Specifically, the reflecting mirror 24 is disposed upstream from the range of deflection in the direction of rotation of the rotating mirror 26. The light deflected by the rotating mirror 26 in a direction upstream from the range of deflection strikes the reflecting mirror 24. The light deflected by the rotating mirror 26 and reflected by the reflecting mirror 24 passes through the synchronous lens 52 and enters the synchronous detection PD 54.

Note that, in some embodiments, the reflecting mirror 24 may be disposed downstream from the range of deflection in the direction of rotation of the rotating mirror 26. Further, the synchronous system 50 may be disposed in the optical path in which light is deflected by the rotating mirror 26 and reflected by the reflecting mirror 24.

Rotation of the rotating mirror 26 causes the synchronous detection PD 54 to output a signal with every receipt of light reflected from the reflecting face of the rotating mirror 26 on the synchronous detection PD 54. That is, the synchronous detection PD 54 periodically outputs a signal (synchronous signal).

The light emission for synchronization described above, which irradiates the synchronous detection PD 54 with light deflected by the rotating mirror 26, allows obtaining the timing of rotation of the rotating mirror 26 based on the timing at which the synchronous detection PD 54 receives light.

With elapse of a predetermined length of time after the LD 11 emits light for synchronization, the LD 11 emitting pulsed light allows the effective scan area to be optically scanned. That is, the LD 11 emits pulsed light during a period of time before and after the timing of illuminating the synchronous detection PD 54, thereby optically scanning the effective scan area.

In this case, examples of the photoreceptor for measuring time and detecting synchronization include a photo diode (PD) as described above, an avalanche photo diode (APD), and a single photon avalanche diode (SPAD) as a Geiger mode APD. The APD and the SPAD have higher sensitivity than a PD, and thus are advantageous in accuracy of detection or the detection distance.

Note that a configuration may be employed in which the rotational position of the motor can be directly detected using an encoder without using the PD 54 for synchronous detection.

The PD output detector 56 amplifies a signal of received light and detects the timing of receiving the signal. To amplify a received-light signal, the PD output detector 56 amplifies the signal using a signal amplifier such as an amplifier. To detect the timing of receiving the received-light signal, the PD output detector 56 detects a rising waveform of the received-light signal output from the PD, whose value is greater than or equal to a fixed output value (threshold level), using a comparator. In other words, the PD output detector 56 obtains a light signal as a binarized logic signal, using a comparator.

The PD output detector 56 detects the rising waveform of the light signal received by the synchronous detection PD 54, and outputs the synchronous signal (the above-described binarized logic signal) for the detected light signal to the optical scanning system controller 63 of the measurement control system 60.

The optical scanning system controller 63 is a device that controls the optical scanning system 200. The optical scanning system controller 63 generates an LD drive signal, which is a control signal, based on the synchronous signal obtained from the PD output detector 56, and outputs the LD drive signal to the LD drive device 12 and the time measuring device 61. That is, the LD drive signal is a delay pulsed lighting signal (periodic pulsed signal), which is delayed relative to the synchronous signal. Further, the optical scanning system controller 63 obtains information on the surrounding environment.

The time measuring PD 42 is driven by a light receiver drive device. The PD output detector 44 amplifies an analog signal from the time measuring PD 42 as needed, and binarizes the signal based on the threshold voltage. Then, the PD output detector 44 outputs the binarized signal to the time measuring device 61.

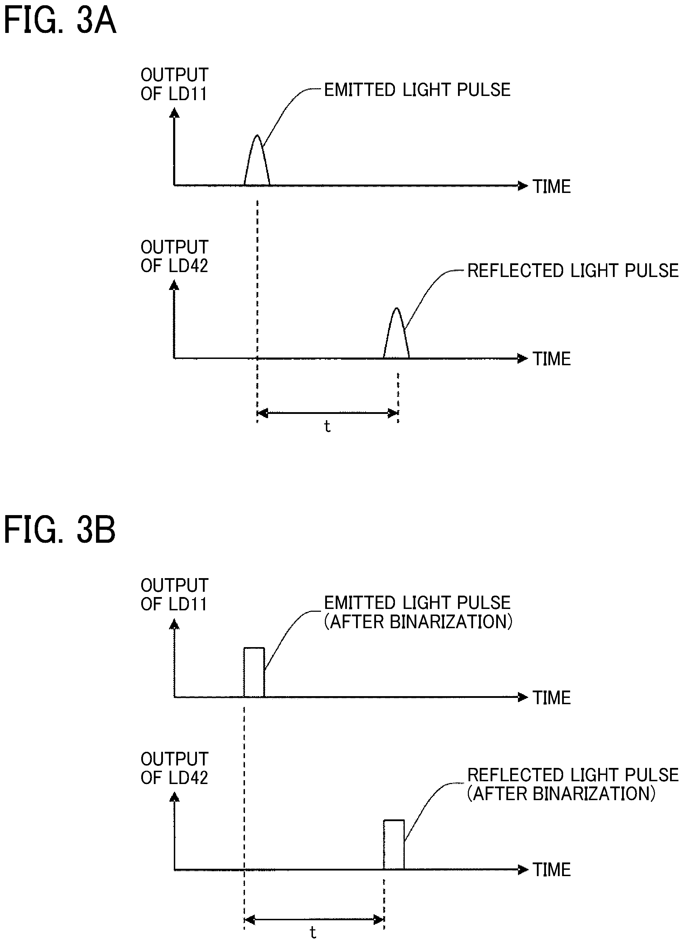

The time measuring device 61 measures the round trip time of the light to the object 800 for which the distance is calculated, based on the LD drive signal generated by the optical scanning system controller 63 and the detection light received by the photoreceptor system 30. More specifically, the time measuring device 61 calculates the difference in input time between the rising timing of the binarized signal output from the PD output detector 44 and the rising timing of the LD drive signal from the optical scanning system controller 63, and based on the calculated time, measures the round trip time of light to the object 800. Then, the time measuring device 61 outputs the measurement result to the distance calculator 62. In this case, the round trip time of light is time t in FIGs. 3A and 3B.

The distance calculator 62 calculates a distance value to the object 800 based on the measurement result of the time measurement device 61. More specifically, the distance calculator 62 converts the measurement result (the round trip time of light) output from the time measuring device 61 into a value of the distance (distance value) to the object 800, using the light velocity value. In some examples, the distance calculator 62 may output data on the scanning direction and the distance value to the object in the scanning direction, to an object recognition device.

In some examples, the object recognition device may perform clustering on the object based on a plurality of continuous distance values, and output data that can be used for, for example, steering control or speed control of a mobile object, based on the clustering result.

FIGs. 3A and 3B each is a timing chart of an emitted light pulse and a reflected light pulse. In this case, the LD drive device 12 drives the LD 11 to emit pulsed light as illustrated in FIG. 3A (hereinafter, referred to as "emitted light pulse") while the rotating mirror 26 scans the effective scan area with light. Then, the time measuring PD 42 detects the pulsed light (hereinafter, referred to as "reflected light pulse") emitted from the LD 11 and reflected (scattered) by an object.

FIG. 3B is a timing chart of an example of an emitted light pulse and a reflected light pulse after binarization. By measuring a time (time length) t from when the LD 11 emits a pulse of emitted light to when the time measuring PD 42, the distance to the object can be calculated. Regarding the measuring of the time, as illustrated in FIG. 3B, the pulse of the emitted light is a rectangular pulse obtained by binarizing the light pulse received by the light receiver such as a PD, and the pulse of the reflected light is a rectangular pulse obtained by binarizing the light received by the PD output detector 44. Then, the time t that is a difference in the rising timing between these rectangular pulses may be measured by the time measuring device 61. Alternatively, the time t may be measured by converting the waveforms of the pulses of the emitted light and the reflected light into digital data (analog-to-digital (A/D) conversion), and performing a correlation operation between the output signal of the LD 11 and the output signal of the time measuring PD 42.

As described above, by measuring the time (time length) t from when the LD 11 emits a light pulse to when the time measuring PD 42 detects a pulse of the light reflected from the object 800, the distance to the object 800 is calculated.

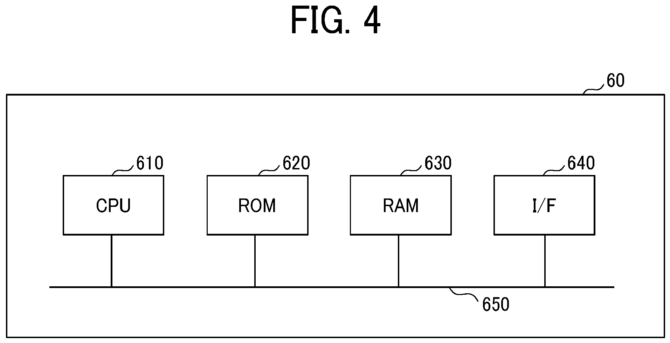

FIG. 4 is a block diagram of a hardware configuration of the measurement control system 60 of the object detector in FIG. 1. As illustrated in FIG. 4, the measurement control system 60 has, as main components, a central processing unit (CPU) 610, a read only memory (ROM) 620, a random access memory (RAM) 630, an interface (I/F) 640, and a bus line 650. The CPU 610, the ROM 620, the RAM 630, and the I/F 640 are interconnected through the bus line 650. The measurement control system 60 may have other hardware blocks as needed.

The CPU 610 controls the entire operations of the measurement control system 60. The ROM 620 serving as a storage unit stores a program executed by the CPU 610 to control each function of the measurement control system 60 and various information. The RAM 630 serving as a storage unit is used as a work area or the like of the CPU 610. Further, the RAM 630 temporarily stores predetermined information. The I/F 640 is an interface used to communicate with another device such as an external network.

The measurement control system 60 may be a processing circuit that is provided with an electronic circuit and is programmed to execute software to implement functions, or may be an application specific integrated circuit (ASIC), a digital signal processor (DSP), a field programmable gate array (FPGA), a system on a chip (SOC), or a graphics processing unit (GPU) designed to execute functions. Further, the measurement control system 60 may be a circuit module.

In the distance measurement system as described above, when Pr denotes a degree of a received signal, L denotes a detection distance, and Po denotes an output of the light source, Pr is determined by formula (1) below: $Pr \propto \text{(proportional)} Po/L^2$ (1).

As can be found from formula (1), the degree of the signal received by the object detector 100 is attenuated by square of the distance to the object. For objects having the same reflectivity, when the distance L is doubled, the degree of the signal received by the object detector 100 becomes Even if the objects have the same reflectivity, when the distance L is doubled, the magnitude of the signal received by the object detector 100 becomes 1/4. In order to extend the detection distance, a device such as an optical system may be modified, but such a modification is restricted by the limited size of the device. In general, the intensity of the output of the light source is increased to extend the detection distance.

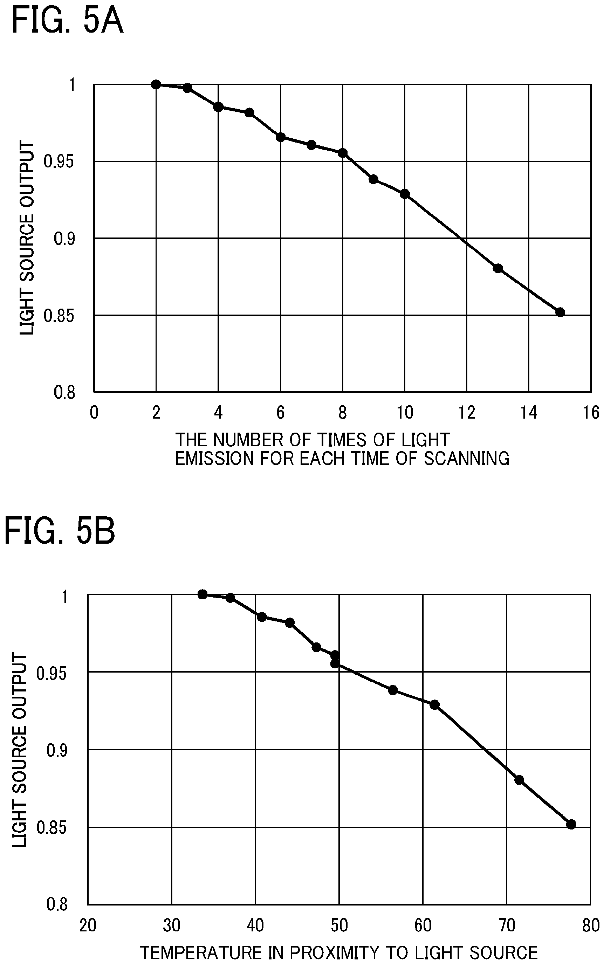

FIG. 5A is a graph of the output power of the light source with respect to the number of times of light emission for one scan. The vertical axis is normalized using the maximum output when the number of times of light emission is two. As indicated by the graph in FIG. 5A, the output power of the light source decreases with an increase in the number of times of light emission. This is because with an increase in the number of times of light emission, the power consumed by the light source per unit time increases, and the temperature of the light source increases.

FIG. 5B is a graph for describing the relation of the temperature near the light source and the output power of the light source. The vertical axis is normalized using the maximum output when the temperature near the light source is 33°C. Same as in FIG. 5A, with an increase in the temperature near the light source, the output power of the light source decreases substantially linearly. For example, if the relation of the number of times of light emission per one time of scanning, the temperature near the light source, and the output power of the light source is measured at the time of shipment from the factory, any formula or table for the relation of the number of times of light emission for one scan, the temperature near the light source, and the output power of the light source may be stored in the object detector. In other words, the temperature near the light source may be controlled based on the number of times of light emission for one scan.

Alternatively, a temperature detector may be disposed near the light source within the object detector 100, and based on the temperature near the light source detected by the temperature detector during the operation of the object detector 100, the output power of the light source is estimated. Alternatively, a light source output detector may be mounted in the object detector 100, and based on the output power of the light source detected during the operation of the object detector 100, the temperature near the light source is estimated.

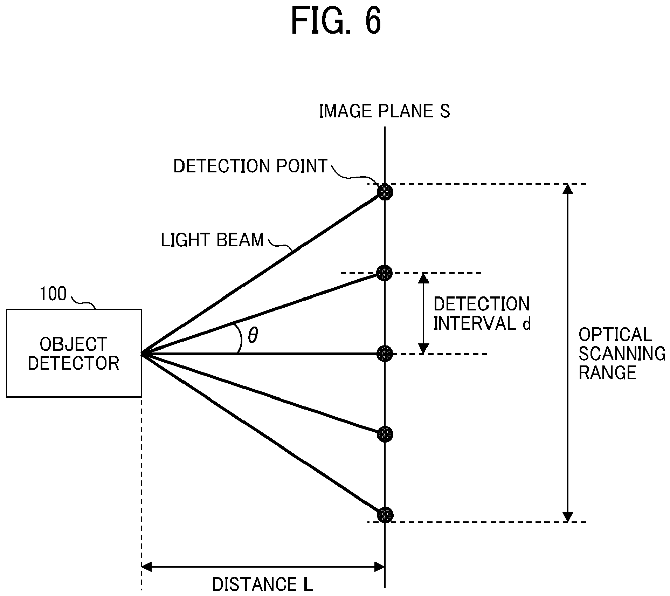

Next, the pixel density is described below. In the present disclosure, the pixel density is considered to be the number of detection points per unit space. FIG. 6 is an illustration of an example configuration for deriving the pixel density. It is assumed that an image plane S is vertically arranged with respect to a light beam emitted perpendicularly from the object detector 100.

As illustrated in FIG. 6, the optical scanning system outputs light beams with the difference θ in the exit angle (the exit-angle difference θ) between the light beams. In this case, when d denotes a detection interval between the detection points on the image plane S, and L denotes a distance between the object detector 100 and the image plane S, the detection interval d is obtained by multiplying the distance L by $\tan \theta$ ($d = L \times \tan \theta$). In other words, since d increases in proportion to the distance L, the pixel density decreases as the distance to the object increases. For example, assuming that the distance to the image plane S is twice as long as the distance L, the same pixel density as in the case where the distance to the image plane S is equal to the distance L can be obtained with the exit-angle difference of θ/2.

In FIGs. 1 and 2A-2C, in the case of a configuration that the optical scanning system operates at a constant speed, the exit-angle difference of θ/2 is obtained by setting the light-emission cycle of the light source to 1/2. In this case, the number of detection points within the optical scanning range, that is, the number of times of light emission of the light source, is also doubled, and the output power of the light source decreases. When the optical scanning system operates at a non-constant speed, it is desirable to set the light-emission cycle in consideration of the change in speed.

In the object detector 100, the optical scanning system controller 63 obtains information on the surrounding environment, and based on the obtained information, controls at least one of the scanning range of the scanning light of the optical scanning system 200 and the light-emission cycle of the LD 11 such that the number of times of light emission in one scan is a constant value.

Note that the detectable distance and the pixel density are determined by the number of times of light emission per unit time. In the present embodiment, the unit time is defined as the scanning time of light that is a time required to mechanically perform one scan. In the following, the term "scanning time" refers to the time required to perform mechanical one scan. The scanning time is the time it takes from the start of light emission to the end of light emission during the mechanical scanning.

In the present embodiment, the time it takes from the first pulse light emission to the final pulse light emission during the mechanical one scan is considered as the scanning time of light, assuming that the pulse light emission is performed by the light source. As described above, the number of times of light emission per unit time is determined based on the scanning time and the light-emission cycle of the light source within the scanning time.

In short, the detectable distance and the pixel density are determined by selecting the scanning time for one mechanical scan and the light-emission cycle of the light source. For the surrounding environment, the object detector 100 may have a mode to detect the surrounding environment by itself or a separate device, such as a stereo camera, may be used to detect the surrounding environment.

Alternatively, the optical scanning system controller 63 may obtain information on the surrounding environment from a network, a road-to-vehicle communication such as Vehicle Information and Communication System VICS (registered trademark), or a global positioning system (GPS).

The environment to be measured by the object detector 100 is constantly changing, and there are situations where the detectable distance is to be given with a higher priority and where the pixel density is to be given with a higher priority. When the object detector 100 is assumed to be mounted on a vehicle, the former example includes the case in which the vehicle is traveling on a highway, and the latter example includes the case in which the vehicle is traveling in a street where many complicated objects exist.

For example, while the vehicle is traveling on a highway, the number of times of light emission per unit time is reduced so as to reduce the amount of heat generated by the light source. Thus, the detectable distance is obtained. In that case, the scanning range is narrowed and a certain degree of pixel density is maintained. By contrast, while the vehicle is traveling in that street, the scanning range is widened and the number of times of light emission per unit time is increased. As a result, the detectable distance is reduced, but the scanning range and the pixel density become higher than a certain level.

Hereinafter, a specific example is given below in which the priority order of the detectable distance and the pixel density is selected according to the surrounding environment in the object detector 100.

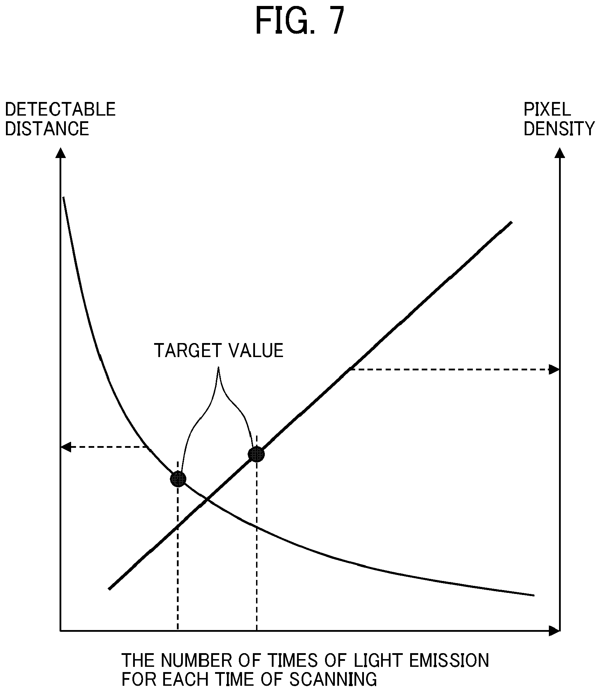

The description of FIGs. 5A, 5B, and 6 provides the configuration that the output power of the light source and the pixel density are determined based on the number of times of light emission for one scan. As can be seen from formula (1), the output power of the light source is inversely proportional to the square of detection distance. FIG. 7 is a graph of the relation between the detectable distance, the pixel density, and the number of times of light emission for one scan.

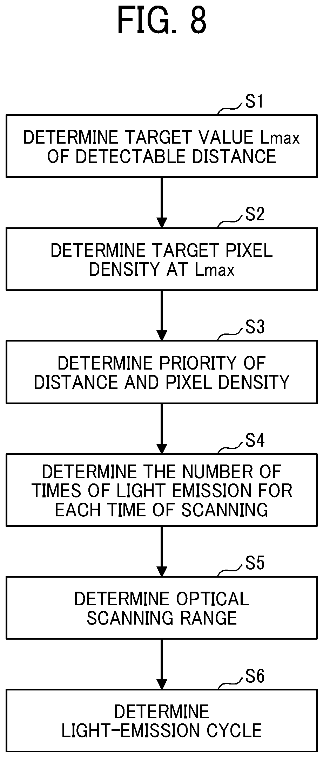

In FIG. 7, the black points on the graph line are provisionally set target values. In many cases, the target value is set so that the detectable distance is longer and the pixel density is higher. Accordingly, the number of times of light emission for one scan differs between these purposes to be achieved. FIG. 8 is a flowchart for explaining the operation flow of the object detector 100 under such a situation.

In the flow of FIG. 8, the optical scanning system controller 63 first obtains information about the surrounding environment, and based on the obtained information, determines the target value for each of the detectable distance and the pixel density (step S 1 and step S2). These processes are the same as the setting of the black points as illustrated in FIG. 7. More specifically, the optical scanning system controller 63 determines a target value Lmax of the detectable distance in step S1 (S1), and plots the pixel density at the target value Lmax and determines the target pixel density in step S2 (S2).

For the target pixel density, how many meters (m) ahead and what type of target is desired to be obtained at may serve as an indicator for determining the target value of the pixel density. For example, when it is desired to detect a person at a distance of 100 m ahead, it is desirable to operate the object detector so that one or more detection points are obtained around a width of about 50 centimeters (cm) that is the width of the person.

Next, in step S3, the optical scanning system controller 63 determines which of the detectable distance and the pixel density is prioritized (S3). At this time, the detectable distance may be completely weighted, or the pixel density may be completely weighted. Also, the specific gravity of the priority may be set to 1 : 1 for the detectable distance and the pixel density.

Since the detectable distance changes with the square of the number of times of light emission, it is more preferable to give priority to the detectable distance.

Next, in step S4, the optical scanning system controller 63 determines the number of times of light emission for one scan based on the priority determined in step S3 (S4).

Subsequently, in step S5, the optical scanning system controller 63 determines the (optical) scanning range in which light actually performs scanning (S5). This optical scanning range may be equal to or narrower than the mechanical scanning range.

In step S6, the optical scanning system controller 63 determines a light-emission cycle in the optical scanning range determined in step S5 (S6). When the scanning speed of the optical scanning system is constant, the light-emission cycle is determined based on the number of times of light emissions for one scan and the optical scanning range. When the scanning speed of the optical scanning system is not constant, it is desirable to determine the light-emission cycle in consideration of the scanning speed of the optical scanning system. Even when the scanning speed of the optical scanning system is constant, the light-emission cycle may be changed with time.

As described above, the optical scanning system controller 63 of the object detector 100 obtains information about the surrounding environment, and based on the obtained information, adjusts at least one of the scanning range of the scanning light of the optical scanning system 200 and the light-emission cycle of the LD 11 such that the number of times of light emission in one scan is a constant value. Then, by changing either one of the light-emission cycle of the light source or the optical scanning range, either one of the detectable distance and the pixel density can be selected to be prioritized in accordance with the surrounding environment.

Note that the detectable distance of the object detector 100 is inversely proportional to the square root of the output power of the light source. The output power PO of the light source is negative proportional to the number of times of light emission Nt per unit time, and expressed by the following equation:

$$PO = Pmax - k \times Nt,$$

where Pmax denotes the maximum output power of the light source, k denotes a proportional constant, and Nt is greater than 0 (Nt > 0).

The pixel density D is determined by the number of times of light emission Ns per unit space. If the scanning time Ts is constant with time, the pixel density also depends on the number of times of light emissions Nt per unit time, and is expressed by the following equation:

$$D = m \times Nt \times Ts,$$

where m is a proportionality constant.

As described above, both the detectable distance and the pixel density are functions of Nt, and can be controlled by the value of Nt. Accordingly, either one of the detectable distance and the pixel density can be selected to be prioritized based on the value of Nt.

Further, any additional device, such as a cooling device for the light source, is not mounted in the object detector 100. Accordingly, the size of the object detector can be reduced.

The amount of heat generated by the light source can be controlled by the object detector 100. For example, a compact temperature sensor is disposed near the light source, and is monitored by the object detector 100 so as to control the number of times of light emission per unit time of the light source. Accordingly, the temperature of the light source can be maintained at a constant value.

In the second embodiment, the optical scanning system controller 63 sets a range of interest $A_R$, and controls the optical scanning system 200 such that the frequency of light emission in the range of interest $A_R$ is higher than in a range other than the range of interest $A_R$, that is, the pixel density in the range of interest $A_R$ is higher than the range other than the range of interest $A_R$. In the present embodiment, the description of the same components as those of the embodiments described above is omitted.

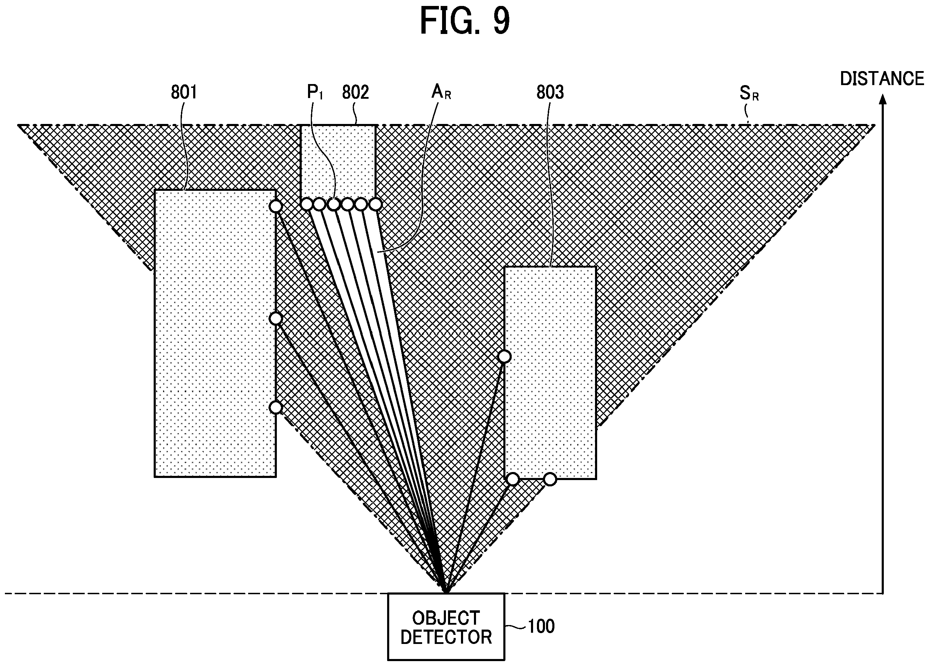

FIG. 9 is an illustration for describing how an object detector 100 according to the second embodiment detects an object. In FIG. 9, three objects (measurement targets) 801 to 803, to which the relative distances from the object detector 100 are different from each other, are present within a scanning range $S_R$.

The distance calculator 62 calculates distance values over the entire scanning range $S_R$ by at least one scan, and the optical scanning system controller 63 sets the range of interest $A_R$ with, for example, a detection point PI from which the relative distance to the object detector 100 is longest among the calculated distance values. Then, the optical scanning system controller 63 controls the optical scanning system 200 such that the frequency of light emission in the range of interest $A_R$ is higher than in a range other than the range of interest $A_R$, that is, the pixel density in the range of interest $A_R$ is higher than the range other than the range of interest $A_R$.

In the example of FIG. 9, the object detector 100 operates such that six out of twelve detection points indicated by white circles in the scanning range $S_R$ are included in the range of interest $A_R$. For example, in a certain scan, the light source emits light to the range of interest $A_R$ six times and also emits light to the range other than the range of interest $A_R$ six times. However, no limitation is intended thereby. In some examples, the light-emission cycle may be changed in a time-varying manner during one scan so that both the range of interest $A_R$ and the other range are measured by one scan.

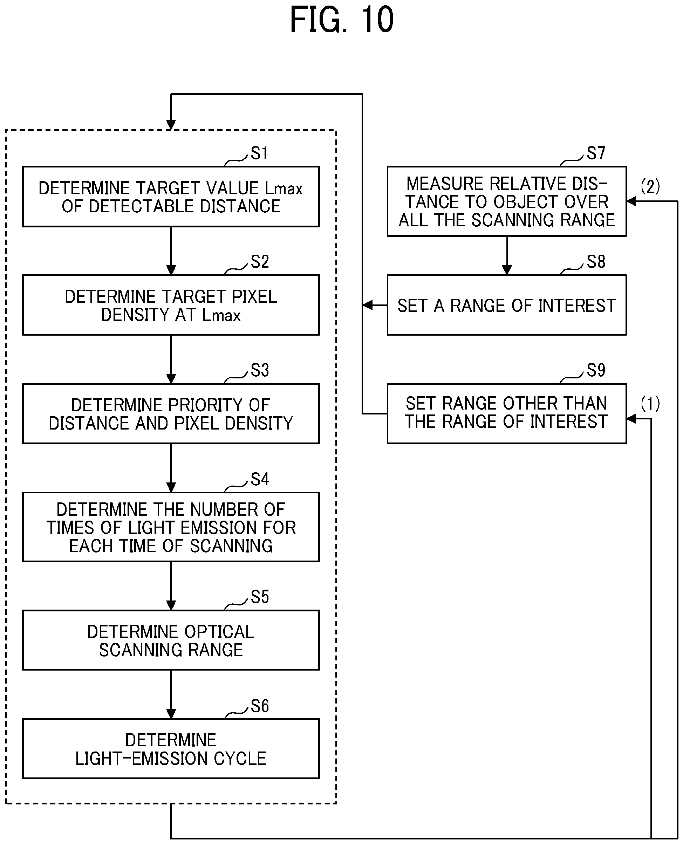

FIG. 10 is a flowchart for explaining the operation flow of the object detector 100 according to the second embodiment, which is related to the operation flow in FIG. 9. In step S7, the distance calculator 62 measures the relative distance to the object over the entire scanning range $S_R$. In this process, a small number of times of light emission for one scan is set such that the object at a distant location is sufficiently detected. However, the pixel density needs to be high enough to fully detect the distant object. In view of this, it is desirable to increase the number of scans while reducing the number of times of light emission for one scan, and separate the irradiation positions of light beams emitted during each scan from each other. This increases the effective pixel density. In this process, the pixel density is preferably uniform over the entire scanning range $S_R$.

In step S8, based on the measurement result in step S7, the optical scanning system controller 63 extracts a most-distant detection point P1 and sets the range of interest $A_R$ (S8). After step S8, the processes of steps S1 to S6 similar to those in FIG. 7 are performed, and the operating conditions in the range of interest $A_R$ are determined.

After that, in step S9, the range other than the range of interest $A_R$ is set (S9). After step S9, the processes of step S1 to S6 similar to those in FIG.7 are performed, and the operating conditions outside the range of interest $A_R$ are determined.

After the relative distance to the object is actually measured as illustrated in FIG. 9, the relative distance to the object is measured again over the entire scanning range $S_R$ in step S7, and the range of interest $A_R$ is determined in step S8. When the process proceeds to step S7, the operation may be performed such that the pixel density is uniform over the entire scanning range as described above, or the result obtained by the operation in FIG. 9 before proceeding to the flow (2) in FIG. 10 may be used in step S7.

As described above, the range of interest $A_R$ is set with the detection point $P_1$, to which the relative distance from the object detector 100 is longest among the measured distances, as the center point. Further, the optical scanning system 200 is controlled such that the frequency of light emission in the range of interest $A_R$ is higher than in the range other than the range of interest $A_R$, that is, the pixel density in the range of interest $A_R$ is higher than the range other than the range of interest $A_R$.

For example, a distant location in the road is raised as an example of the range of interest for the object detector 100. The pixel density decreases at a distant location in the road. For this reason, a distant location in the road is set as the range of interest $A_R$, and the frequency of light emission, i.e., the pixel density in the range of interest $A_R$, is increased as described above so as to not make a gap between pixels.

In such a configuration that sets the distant location in the road as the range of interest $A_R$ and increases the pixel density in the range of interest $A_R$, the distance between the object detector 100 and the object is obtained so as to determine the range of interest $A_R$. In the present embodiment, the range-finding result is obtained from the entire predetermined scanning range $S_R$ by the object detector 100, and based on the result, determines the range of interest AR with the most-distant detection point P1, from which the relative distance to the object detector 100 is longest among the obtained detection points, as the center. Accordingly, the range of interest AR to be set by the object detector 100 can be presumed.

Note that the object detector 100 may include another distance calculator that calculates a distance in a different way from the distance calculator 62. In this case, the distance calculator measures the relative distance to the object over the entire scanning range $S_R$ in step S7 in FIG. 10. The entire scanning range $S_R$ is included in the detection range of the distance calculator, and the range of interest AR is set based on the calculation result of the distance calculator. The distance calculator is, for example, a stereo camera.

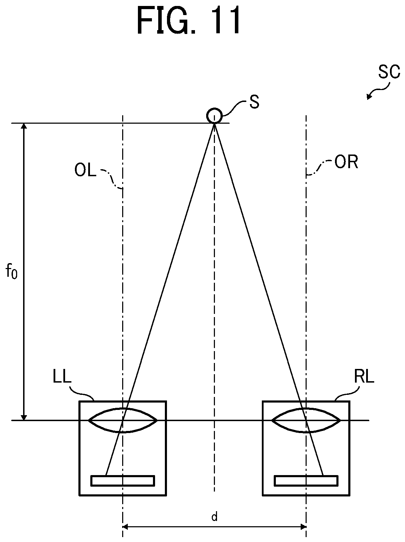

FIG. 11 is an illustration of a basic configuration of a stereo camera SC. The stereo camera SC illustrated in FIG. 11 is a device that obtains an image of a subject by using at least one pair of imaging optical systems arranged symmetrically.

In FIG. 11, monocular cameras LL and RL are a distance d away from each other. FIG. 11 also indicates the optical axis OL of the monocular camera LL and the optical axis OR of the monocular camera RL. The stereo camera SC is capable of obtaining the images from the monocular cameras LL and RL disposed at a plurality of positions, and measuring the distance to and the position of the object S by using the triangulation of the disparity (the difference in image position between images), the base-line length (the distance d between the monocular cameras), and the focal length f0.

Examples of the distance calculator other than the distance calculator 62 further includes a monocular camera and a millimeter-wave radar in addition to the stereo camera SC. The use of an imaging unit such as a camera has an effect that the range of interest $A_R$ can be set with higher accuracy because the pixel density is extremely higher than that of the object detector 100.

In the third embodiment, an example case in which a plurality of scans are performed in a range other than the range of interest $A_R$ is described. In the present embodiment, the description of the same components as those of the embodiments described above is omitted.

When the operation in FIG. 9 described in the second embodiment is performed, a difference in pixel density occurs between the range of interest $A_R$ and the range other than the range of interest $A_R$. The third embodiment is provided to avoid such a situation.

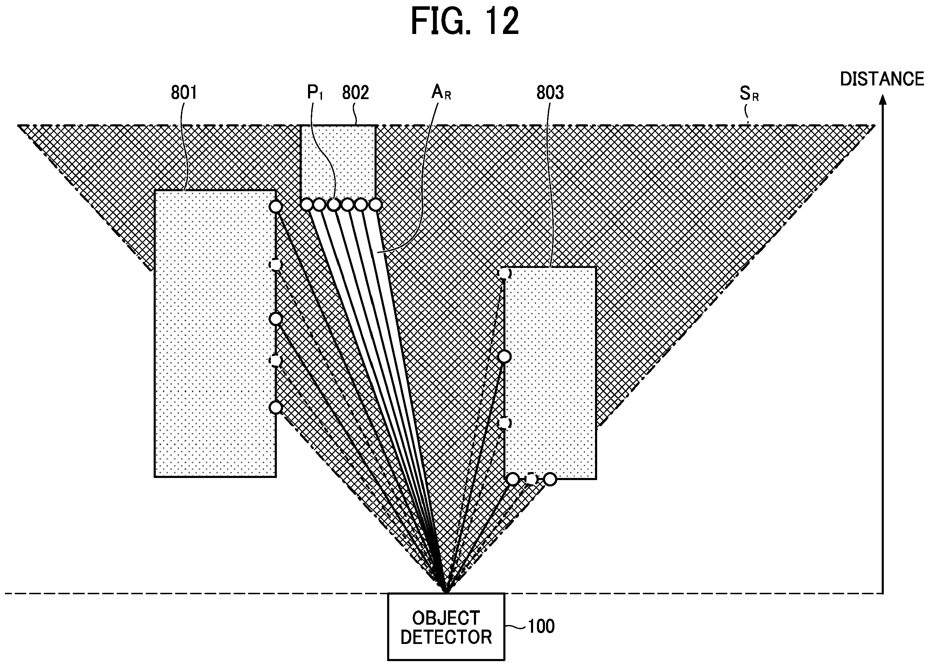

FIG. 12 is an illustration for describing how an object detector 100 according to the third embodiment detects an object. As illustrated in FIG. 12, a plurality of scans are performed in the range other than the range of interest $A_R$ such that a position different from the previous scan position is irradiated with scanning light. In FIG. 12, the five broken lines in the scanning range $S_R$ schematically indicate the state in which a position different from the previous scan position is irradiated with scanning light.

By repeating light irradiation to a position different from the light irradiation position in the pre-scanning, it is possible to reduce the difference in pixel density between the range of interest $A_R$ and the range other than the range of interest $A_R$. For example, if the ratios of the distance to the object and the pixel density in the range other than the range of interest $A_R$ with respect to those in the range of interest $A_R$ are 1/2 and 1/4, respectively, twice as many scans as is performed in the range other than the range of interest $A_R$ as compared to the range of interest $A_R$ based on the relations in FIGs. 5A and 5B so as to obtain the equal pixel density between the range other than the range of interest $A_R$ and the range of interest $A_R$.

As described above, the optical scanning system controller 63 performs two or more scans in the range other than the range of interest $A_R$ in the scanning range $S_R$, and controls the optical scanning system 200 such that scanning light irradiates a different position in each scan.

This configuration effectively increases the pixel density by temporal integration, and compensates for the decrease in the irradiation frequency (that is, the pixel density) in the range other than the range of interest $A_R$.

In a fourth embodiment, an example case in which a plurality of scans is performed in a range other than the range of interest $A_R$ is described. In the present embodiment, the description of the same components as those of the embodiments described above is omitted.

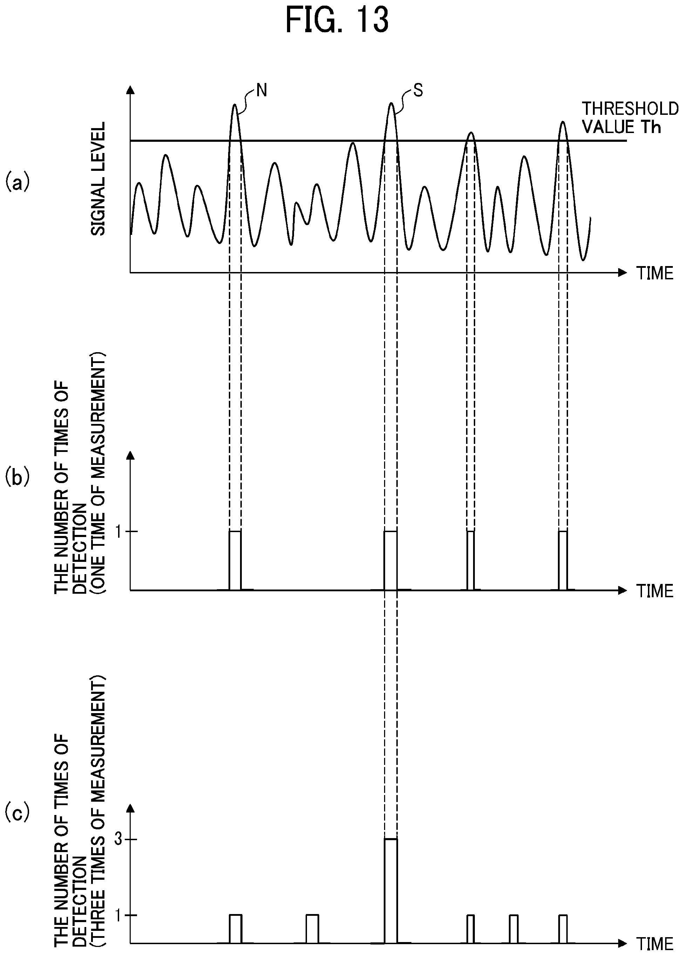

FIGs. 13(a), 13(b), and 13(c) each is a timing chart for describing a reduction in noise in the object detector 100. In FIGs. 13(a), 13(b), and 13(c), noise N and detection signal S (signal reflected) from the object are indicated. Further, a threshold value Th that distinguishes the detection signal S from the noise N.

When the object is at a distant location, the signal level significantly decreases based on Formula (1).

For example, when sunlight or the like enters the photoreceptor system, the shot noise increases, and as illustrated in FIG. 13(a), the level of the detection signal S from the distant object might be approximately equal to the level of the noise N.

At this time, depending on the degree of the threshold value Th to be set, both the noise N and the detection signal S are equally binarized as illustrated in FIG. 13(b), and input to the time measuring device 61 in FIG. 1. In this case, it is conceivable that the noise N is recognized as an object and erroneous steering control is performed. In view of such a situation, an integration process is performed at least in the range of interest $A_R$ for detection of a distant object.

As illustrated in FIG. 13(b), in one measurement, many noises N other than the detection signal S from the object exceed the threshold Th. On the other hand, when the values obtained by three times of measurements are integrated as illustrated in FIG. 13(c), the number of times of detection increases only at the position where the detection signal S from the object exists.

This is because the probability of occurrence of the noise N is random in time. In order to integrate the three-measurement results, three or more scans are performed such that the same spatial position is irradiated with light during the three or more scans (that is, the light irradiation position is the same in each scan). For example, the range of interest $A_R$ is defined as a distant location, and the measurement results are integrated. However, if the range other than the range of interest $A_R$ is determined to be distant from the system, the measurement results obtained from the range may be integrated as well.

As described above, the optical scanning system controller 63 performs two or more scans in the range of interest $A_R$ within the scanning range $S_R$, and controls the optical scanning system 200 so that the light-irradiation position is the same for each scan.

When the range of interest $A_R$ is at a distant location, the amount of light that irradiates the object and returns is reduced, so that the S/N ratio decreases. As a result, it is difficult to distinguish the detection signal S from the object from the noise N (shot noise, circuit-derived noise, etc.) in one measurement. Taking advantage of the fact that the noise N occurs at random in time, by integrating the detection signal S with time, a substantial S/N ratio is improved, and the detection signal S and the noise N can be distinguished.

In the object detector 100 according to the first to fourth embodiments, when the scanning speed of the optical scanning system 200 is not uniform with time, the light-emission cycle may be determined by the optical scanning system controller 63 in consideration of the scanning speed of the optical scanning system 200.

When the optical scanning system 200 employs a mechanical resonance characteristic of a MEMS mirror or the like, the scanning speed is not uniform but changes, for example, in a trigonometric function.

In this case, if the light-emission cycle is constant, the frequency of irradiation is low spatially at a portion where the scanning speed is high, and the frequency of irradiation is high spatially at a portion where the scanning speed is low. As a result, the unevenness of the density of the detection points unintentionally occurs.

For this reason, the optical scanning system controller 63 controls the optical scanning system 200 so that the light-irradiation (emission) cycle is shortened in a portion where the scanning speed of the optical scanning system 200 is fast, and the light-emission cycle is widened in a portion where the scanning speed is slow. For example, if the optical scanning system controller 63 determines the light-emission cycle by multiplying the scanning speed, the spatial irradiation frequency can be made at least uniform.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Although the preferred embodiments have been described in detail above, the present disclosure is not limited to the above-described embodiments, and various modifications and substitutions may be made to the above-described embodiments without departing from the scope described in the claims.

**Claims**

1. An object detector (100) comprising:
   an optical scanning system (200) including:

   a light source (11) configured to emit light at a predetermined light-emission cycle; and
   a phototransmitter system (20) configured to scan a certain range ($S_R$) with the light emitted from the light source (11); and

   an optical scanning system controller (63) configured to control at least one of a scanning range of the phototransmitter system (20) and a light-emission cycle of the light source (11) of the optical scanning system (200) to maintain the number of times of light emission for one scan at a constant value, so as to calculate a distance to an object.

2. The object detector (100) according to claim 1, wherein the optical scanning system controller (63) is configured to set a range of interest ($A_R$) within the certain range ($S_R$) and control the optical scanning system (200) to increase a frequency of light emission to the range of interest ($A_R$) as compared to other range other than the range of interest ($A_R$) within the certain range ($S_R$).

3. The object detector (100) according to claim 2, further comprising:

   a photoreceptor system (30) configured to receive detection light that has been emitted from the optical scanning system (200) and reflected from an object; and
   a distance calculator (62) configured to calculate a distance value to the object based on the detection light received by the photoreceptor system (30) and a control signal for controlling the light source (11).

4. The object detector (100) according to claim 3, wherein the distance calculator (62) calculates distance values over the certain range as a whole by at least one scan, and
   wherein the optical scanning system controller (63) sets the range of interest ($A_R$) with a detection point, to which a relative distance to the object is longest among the calculated distance values, as a center point.

5. The object detector (100) according to claim 2, further comprising a distance calculator (SC) configured to calculate a distance value to the object, wherein the certain range ($S_R$) is included in a detection range of the distance calculator (SC), and
   wherein the optical scanning system controller (63) sets the range of interest ($A_R$) based on a calculation result of the distance calculator (SC).

6. The object detector (100) according to any one of claims 2 to 5, wherein the optical scanning system controller (63) performs two or more scans in the other range other than the range of interest ($A_R$) within the certain range ($S_R$), and controls the optical scanning system (200) to, for each scan, emit light to a different position in the other range other than the range of interest

($A_R$) within the certain range ($S_R$).

7.  The object detector (100) according to any one of claims 2 to 5,
    wherein the optical scanning system controller (63) performs two or more scans in the range of interest ($A_R$) within the certain range ($S_R$), and controls the optical scanning system (200) to, for each scan, emit light to a same position in the range of interest ($A_R$) within the certain range ($S_R$).

8.  The object detector (100) according to any one of claims 1 to 7,
    wherein a scanning speed of the optical scanning system (200) varies with time, and
    wherein the optical scanning system controller (63) determines the light-emission cycle based on the scanning speed.

# FIG. 1

# FIG. 2A

# FIG. 2B

# FIG. 2C

# FIG. 3A

OUTPUT
OF LD11

EMITTED LIGHT PULSE

TIME

OUTPUT
OF LD42

REFLECTED LIGHT PULSE

TIME

$t$

# FIG. 3B

OUTPUT
OF LD11

EMITTED LIGHT PULSE
(AFTER BINARIZATION)

TIME

OUTPUT
OF LD42

REFLECTED LIGHT PULSE
(AFTER BINARIZATION)

TIME

$t$

# FIG. 4

## FIG. 5A

THE NUMBER OF TIMES OF LIGHT
EMISSION FOR EACH TIME OF SCANNING

## FIG. 5B

TEMPERATURE IN PROXIMITY TO LIGHT SOURCE

# FIG. 6

IMAGE PLANE S

DETECTION POINT

LIGHT BEAM

100

OBJECT
DETECTOR

θ

DETECTION
INTERVAL d

OPTICAL
SCANNING
RANGE

DISTANCE L

# FIG. 7

DETECTABLE
DISTANCE

PIXEL
DENSITY

TARGET VALUE

THE NUMBER OF TIMES OF LIGHT EMISSION
FOR EACH TIME OF SCANNING

# FIG. 8

S1

DETERMINE TARGET VALUE Lmax
OF DETECTABLE DISTANCE

S2

DETERMINE TARGET PIXEL
DENSITY AT Lmax

S3

DETERMINE PRIORITY OF
DISTANCE AND PIXEL DENSITY

S4

DETERMINE THE NUMBER OF
TIMES OF LIGHT EMISSION FOR
EACH TIME OF SCANNING

S5

DETERMINE OPTICAL
SCANNING RANGE

S6

DETERMINE
LIGHT-EMISSION CYCLE

# FIG. 9

EP 3 709 052 A1

# FIG. 10

**S1**
DETERMINE TARGET VALUE Lmax
OF DETECTABLE DISTANCE

**S2**
DETERMINE TARGET PIXEL
DENSITY AT Lmax

**S3**
DETERMINE PRIORITY OF
DISTANCE AND PIXEL DENSITY

**S4**
DETERMINE THE NUMBER OF
TIMES OF LIGHT EMISSION FOR
EACH TIME OF SCANNING

**S5**
DETERMINE OPTICAL
SCANNING RANGE

**S6**
DETERMINE
LIGHT-EMISSION CYCLE

**S7**
MEASURE RELATIVE DIS-
TANCE TO OBJECT OVER
ALL THE SCANNING RANGE    (2)

**S8**
SET A RANGE OF INTEREST

**S9**
SET RANGE OTHER THAN
THE RANGE OF INTEREST    (1)

# FIG. 11

# FIG. 12

EP 3 709 052 A1

# FIG. 13

(a)

SIGNAL LEVEL

N    S

THRESHOLD VALUE Th

TIME

(b)

THE NUMBER OF TIMES OF DETECTION (ONE TIME OF MEASUREMENT)

1

TIME

(c)

THE NUMBER OF TIMES OF DETECTION (THREE TIMES OF MEASUREMENT)

3

1

TIME

Europäisches
Patentamt

European
Patent Office

Office européen
des brevets

# EUROPEAN SEARCH REPORT

Application Number

EP 20 15 7489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 383 753 B1 (TEMPLETON BRADLEY [US] ET AL) 5 July 2016 (2016-07-05) | 1-7 | INV. |
| A | * column 1, line 60 - column 3, line 49 * <br> * column 5, line 3 - column 34, line 55 * <br> * figures 1-12 * <br> ----- | 8 | G01S7/484 <br> G01S17/89 <br> G01S17/931 <br> G01S17/10 |
| X | US 2018/164439 A1 (DROZ PIERRE-YVES [US] ET AL) 14 June 2018 (2018-06-14) | 1,8 | |
| A | * paragraphs [0018] - [0025], [0041] - [0106] * <br> * figures 1-5 * <br> ----- | 2-7 | |

TECHNICAL FIELDS
SEARCHED (IPC)

G01S

The present search report has been drawn up for all claims

| Place of search | Date of completion of the search | Examiner |
|---|---|---|
| Munich | 30 July 2020 | Kruck, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................

& : member of the same patent family, corresponding document

EPO FORM 1503 03.82 (P04C01)

EP 3 709 052 A1

## ANNEX TO THE EUROPEAN SEARCH REPORT
## ON EUROPEAN PATENT APPLICATION NO.

EP 20 15 7489

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2020

| Patent document cited in search report | | Publication date | Patent family member(s) | | Publication date |
|---|---|---|---|---|---|
| US 9383753 | B1 | 05-07-2016 | US | 9383753 B1 | 05-07-2016 |
| | | | US | 2016274589 A1 | 22-09-2016 |
| | | | US | 2018267556 A1 | 20-09-2018 |
| | | | US | 2019033879 A1 | 31-01-2019 |
| | | | US | 2019086931 A1 | 21-03-2019 |
| US 2018164439 | A1 | 14-06-2018 | CN | 110073239 A | 30-07-2019 |
| | | | EP | 3538921 A2 | 18-09-2019 |
| | | | JP | 2020516854 A | 11-06-2020 |
| | | | KR | 20190086041 A | 19-07-2019 |
| | | | KR | 20200039023 A | 14-04-2020 |
| | | | US | 2018164439 A1 | 14-06-2018 |
| | | | WO | 2018112013 A2 | 21-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007015416 A